Europäisches Patentamt

European Patent Office

Office européen des brevets

(19)

(11) Veröffentlichungsnummer : **0 165 392**
**B1**

(12) # EUROPÄISCHE PATENTSCHRIFT

(45) Veröffentlichungstag der Patentschrift :
25.05.88

(51) Int. Cl.⁴ : **G 01 B 21/00, G 01 D   5/245**

(21) Anmeldenummer : 85104316.6

(22) Anmeldetag : 10.04.85

(54) Positionsmesseinrichtung.

(30) Priorität : 21.04.84 DE 3415091
23.10.84 DE 3438750
30.05.84 DE 3420187
19.03.85 DE 3509838

(43) Veröffentlichungstag der Anmeldung :
27.12.85 Patentblatt 85/52

(45) Bekanntmachung des Hinweises auf die Patenterteilung : 25.05.88 Patentblatt 88/21

(84) Benannte Vertragsstaaten :
AT CH DE FR GB IT LI NL SE

(56) Entgegenhaltungen :
DE-A- 2 952 106
DE-A- 3 039 483
GB-A- 2 086 568

(73) Patentinhaber : Dr. Johannes Heidenhain GmbH
Postfach 1260
D-8225 Traunreut (DE)

(72) Erfinder : Burkhardt, Horst, Dr.
Fraueneichweg 12
D-8221 Truchtlaching (DE)
Erfinder : Ernst, Alfons
Traunring 62
D-8225 Traunreut (DE)
Erfinder : Dangschat, Holmer
Heinz-von-Stein-Strasse 25
D-8225 Traunreut (DE)
Erfinder : Wogatzke, Horst
Konstantinstrasse 23
D-4040 Neuss (DE)

EP 0 165 392 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft eine Positionsmeßeinrichtung gemäß dem Oberbegriff des Anspruches 1.

Eine solche Positionsmeßeinrichtung ist aus DE-A-3 039 483 bekannt.

Bei Positionsmeßeinrichtungen ist es zur Ermittlung von Bezugspositionen bekannt, relativ zueinander bewegliche Maschinenteile oder Meßeinrichtungteile aus einer Ausgangsposition bis zu einer Referenzmarke zu verfahren, um den bis dort zurückgelegten Wert zu ermitteln und zu speichern oder die Referenzmarke zur Bezugsposition mit dem Wert « Null » zu erklären. Ein solches Verfahren ist mit einer inkrementalen Längen- oder Winkelmeßeinrichtung möglich, wie sie in der DE-C 19 64 381 beschrieben wird. Dieses Verfahren erfordert aber eine ungehinderte Relativbeweglichkeit der zu messenden Objekte, da die Bauteile der Meßeinrichtung fest mit den zu messenden Objekten verbunden sind und gemeinsam mit diesen zu einer Referenzmarke verstellt werden müssen.

Aus der DE-A 16 73 887 ist eine Meßeinrichtung bei einer Maschine bekannt, die bei einem auf dem Maschinenbett festgeklemmten Maschinenschlitten die Ermittlung einer Bezugsposition erlaubt. Zuerst muß dort der Schlitten in diejenige Position gefahren werden, die später als Bezugsposition zu Null erklärt werden soll. Danach wird der Schlitten auf dem Maschinenbett festgeklemmt. Anschließend wird die Abtastplatte der Meßeinrichtung relativ zum Maßstab verfahren, bis eine Referenzmarke erreicht ist. Bei Erreichen der Referenzmarke wird der elektronische Zähler der Meßeinrichtung auf den Wert Null gesetzt. Sodann kann die Klemmung für den Maschinenschlitten wieder gelöst und der Schlitten in die gewünschte Position gefahren werden. Die Lage der Referenzmarke stellt also die Bezugsposition für die weiteren Arbeitsgänge dar.

Die bekannten Verfahren zur Ermittlung einer als Ausgangslage definierten Bezugsposition, die vor den eigentlichen Arbeitsvorgängen erfolgt, sind mit den beschriebenen inkrementalen Meßeinrichtungen jedoch dann nicht mehr möglich, wenn bereits Arbeitsgänge erfolgt sind und beispielsweise laufende Arbeitsgänge unterbrochen werden. Diese Unterbrechung eines laufenden Arbeitsvorganges, beispielsweise bei einem Handhabungsautomaten — im allgemeinen als Industrieroboter bezeichnet — ist durch Stromausfall möglich. Der Roboter bleibt dann in seiner momentanen Position stehen ; der auf seine ursprüngliche Bezugsposition bezogene Meßwert geht aber durch den Stromausfall verloren, da auch die Messung unterbrochen wurde. Zur Fortführung des unterbrochenen Arbeitsvorganges müßte jedoch die Bezugsposition bekannt sein. Eine Rückbewegung des Roboters aus seiner Momentanposition in die ursprüngliche Ausgangslage scheidet aber in der Regel aus, weil beispielsweise gerade ein Werkzeug im Eingriff ist.

Der Erfindung liegt die Aufgabe zugrunde, eine Positionsmeßeinrichtung der genannten Gattung anzugeben, die die Nachteile der bekannten Einrichtungen beseitigt und es ermöglicht, nach Verlust der Lageinformation in unbekannten Momentanpositionen ohne Bewegung der zu messenden Objekte eine Bezugsposition zu reproduzieren.

Diese Aufgabe wird erfindungsgemäß durch die Merkmale des Patentanspruchs 1 gelöst.

Die mit der Erfindung erzielten Vorteile bestehen insbesondere darin, daß die vorgeschlagene Positionsmeßeinrichtung auf einfache und schnelle Weise die Reproduktion einer Bezugsposition nach unterbrochenen Messungen und Bewegungen aus unbekannten Momentanpositionen erlaubt, ohne daß die zu messenden Objekte bewegt werden müssen. Ein solches zu messendes Objekt in Form eines Werkzeuges kann somit bei einer Unterbrechung des Meßvorganges und des Bearbeitungsvorganges durch eine Störung im Eingriff am Werkstück verbleiben, so daß nach Behebung der Störung und Wiederermittlung der Bezugsposition der unterbrochene Bearbeitungsvorgang unverzüglich wieder fortgesetzt werden kann. Ein Zurückziehen des Werkzeuges von der Eingriffstelle am Werkstück und ein erneutes genaues Wiederanfahren dieser Eingriffstelle ist zeitaufwendig und schwierig und kann zu Beschädigungen des Werkstückes führen. Ferner sind beispielsweise bei Industrierobotern programmgesteuerte Überprüfungen der jeweiligen Bezugspositionen zwischen einzelnen Arbeitsabläufen möglich, wodurch die Betriebssicherheit derartiger Systeme erheblich erhöht wird.

Vorteilhafte Ausbildungen der Erfindung entnimmt man den abhängigen Ansprüchen.

Mit Hilfe von Ausführungsbeispielen wird die Erfindung anhand der Zeichnungen noch näher erläutert.

Es zeigt

Figur 1 eine Längenmeßeinrichtung an den zu messenden Maschinen-Bauteilen ;

Figur 2 eine Draufsicht auf die Längenmeßeinrichtung gemäß Figur 1 ;

Figur 3 einen Ausschnitt einer Maßverkörperung aus der Längenmeßeinrichtung gemäß Figur 1 und 2 in vergrößerter Darstellung ;

Figur 4 eine Seitenansicht der Maßverkörperung gemäß Figur 3 mit zwei schematisierten Abtastbaueinheiten ;

Figur 5 eine Maßverkörperung mit zwei Inkrementalteilungen und Referenzmarke ;

Figur 6 zwei Maßverkörperungen mit je einer Inkrementalteilung, davon eine mit Referenzmarke ;

Figur 7 eine Maßverkörperung mit einer Inkrementalteilung und einer Referenz-Codeteilung ;

Figur 8 eine Winkelmeßeinrichtung im Axialschnitt ;

Figur 9 eine weitere Winkelmeßeinrichtung im Axialschnitt ;

Figur 10 eine Ansicht eines Ausschnittes einer zweiten Teilscheibe;

Figur 11 eine Ansicht eines Ausschnittes einer dritten Teilscheibe;

Figur 12 eine Ansicht einer zweiten Abtastplatte;

Figur 13 eine Ansicht eines Ausschnittes einer weiteren zweiten Teilscheibe;

Figur 14 eine Ansicht eines Ausschnittes einer weiteren dritten Teilscheibe;

Figur 15 eine Ansicht einer weiteren zweiten Abtastplatte und

Figur 16 eine Ansicht eines Ausschnittes einer ersten Teilscheibe mit zusätzlicher Referenzmarke.

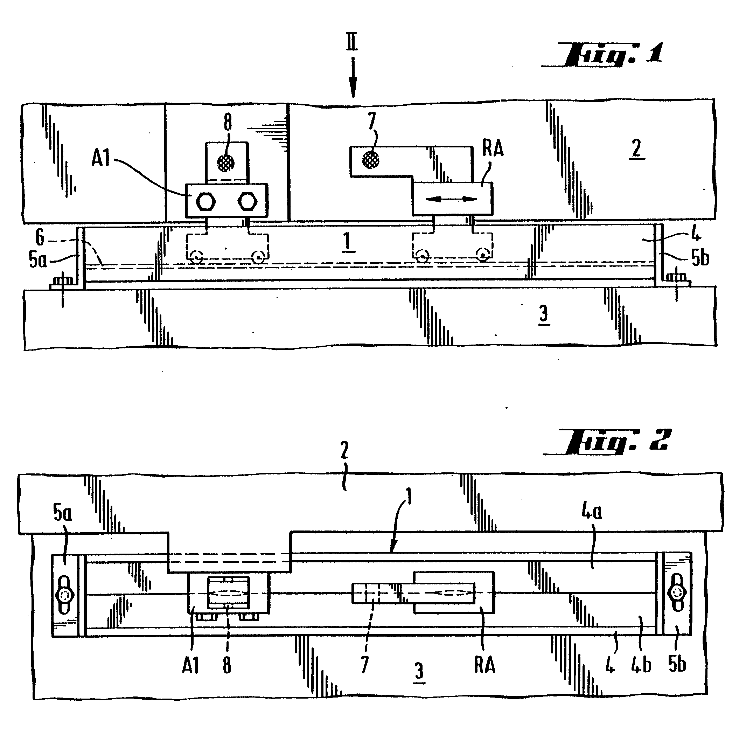

Die in Figur 1 dargestellte Positionsmeßeinrichtung 1 ist auf die wesentlichen Einzelheiten beschränkt und aus diesem Grund stark schematisiert. Mit der Positionsmeßeinrichtung 1 wird die relative Lage zweier Objekte 2 und 3 zueinander gemessen. Diese Objekte 2 und 3 können Bett und Schlitten einer nicht dargestellten Maschine, beispielsweise einer Werkzeugmaschine sein.

Am Schlitten 3 ist ein Hohlkörper 4 mittels Winkeln 5a und 5b befestigt. Innerhalb des Hohlkörpers 4 ist in bekannter Weise eine Maßverkörperung 6 angeordnet. Diese Maßverkörperung 6 trägt eine Inkrementalteilung T1, die in ebenfalls bekannter Weise von einer Abtastbaueinheit A1 abgetastet wird. Die Abtastbaueinheit A1 ist fest mit dem Bett 2 der Maschine verbunden und wird bei Relativbewegungen zwischen Bett 2 und Schlitten 3 relativ zur Maßverkörperung 6 bewegt. Da die Maßverkörperung die besagte Inkrementalteilung T1 trägt, auf die später noch näher eingegangen wird, kann ständig die Position des bewegten Schlittens 3 zum stillstehenden Bett 2 ermittelt werden, denn die von der Abtastbaueinheit A1 während der Bewegung abgetasteten Intervalle der Inkrementalteilung T1 werden in einer nicht dargestellten Auswerteeinrichtung erfaßt und als Weg- bzw. Positionswert angezeigt.

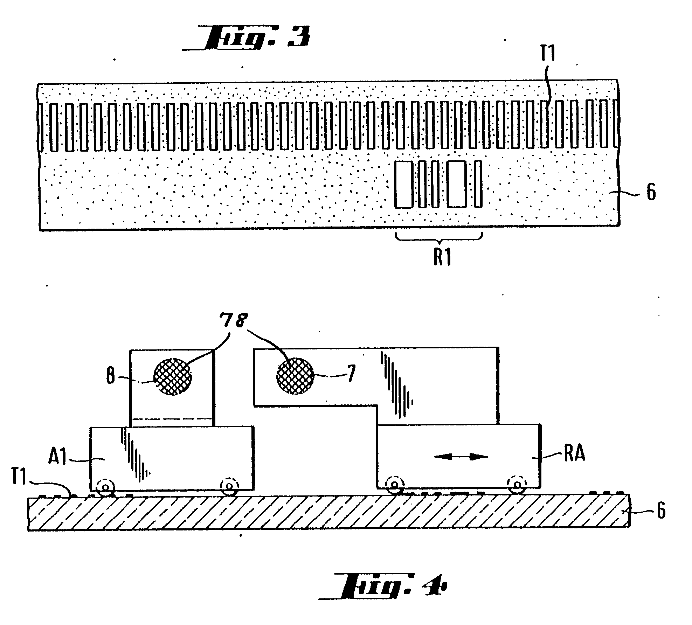

Zusätzlich zur Abtastbaueinheit A1 ist eine weitere Abtastbaueinheit vorgesehen, die als Referenz-Abtastbaueinheit RA bezeichnet, und unabhängig von Bett 2 und Schlitten 3 relativ zur Maßverkörperung 6 verschiebbar ist. Mit Hilfe dieser Referenz-Abtastbaueinheit RA kann jederzeit die Position der Abtastbaueinheit A1 zu einem Bezugspunkt der Maßverkörperung 6 ermittelt werden. Der Bezugspunkt wird durch eine Referenzmarke R1 bestimmt, deren Lage zur Inkrementalteilung T1 der Maßverkörperung absolut festgelegt ist. Diese Bezugspunktermittlung wird anhand der Figur 3 und folgende noch näher beschrieben.

Figur 2 zeigt eine Draufsicht auf die Anordnung gemäß Figur 1. Es ist ersichtlich, daß der Hohlkörper 4 an seiner Oberseite mit Dichtelementen 4a und 4b abgedichtet ist, die im Bereich der Abtastbaueinheiten A1 und RA durchgriffen werden, wozu diese Abtastbaueinheiten A1 und RA in bekannter Weise nicht näher bezeichnete Mitnehmer aufweisen. Im Bereich dieser Mitnehmer werden die Dichtelemente 4a und 4b aufgespreizt und schmiegen sich an die Außenbereiche der Mitnehmer an, deren Querschnitt etwa dem eines zweischneidigen Schwertes gleicht.

In Figur 3 ist ein Ausschnitt der Maßverkörperung 6 vergrößert dargestellt. Die Maßverkörperung 6 besteht aus Glas und ist mit einer für Strahlung undurchlässigen Schicht versehen. Unter Strahlung sei hier Strahlung im optischen Bereich verstanden.

Mit Hilfe von photolithographischen Verfahren ist auf der Maßverkörperung 6 eine Inkrementalteilung T1 angebracht, die allgemein bekannt ist. An einem als Bezugspunkt definierten Ort ist in gleicher Weise eine Referenzmarke R1 auf der Maßverkörperung 6 angeordnet. Selbstverständlich können auch mehrere Referenzmarken vorgesehen werden.

Die Abtastung der Inkrementalteilung T1 erfolgt in bekannter Weise; anhand der Figur 4 soll erläutert werden, wie die Bezugsposition in der erfindungsgemäßen Weise ermittelt wird.

Auf der nun in Seitenansicht gezeigten Maßverkörperung 6 tastet die Abtastbaueinheit A1 die Inkrementalteilung T1 ab. An beliebiger Stelle sollen die Abtastbaueinheit A1 und die Maßverkörperung 6 sich in einer Ruhestellung befinden. Diese Ruhestellung kann durch Unterbrechung der Energieversorgung der Maschine verursacht worden sein. Durch Stromunterbrechungen gehen bei inkrementalen Meßeinrichtungen jedoch auch die Positionswerte verloren.

Um diese Positionswerte wiederzugewinnen, ist es beim Stand der Technik (siehe u. a. eingangs aufgeführte Druckschriften) erforderlich, den Schlitten soweit zu verfahren, daß die Referenzmarke mit einem entsprechenden Abtastfeld der Abtastbaueinheit koinzidiert, und so ein Referenzimpuls erzeugt wird, der die Auswerteeinrichtung auf einen bestimmten Wert, z. B. « Null » setzt. Nun kann der Schlitten wieder positioniert werden. Die aus dieser Vorgehensweise resultierenden Nachteile wurden bereits abgehandelt, so daß nun die Ermittlung der Bezugsposition dargelegt werden soll:

Der Schlitten 3 mit der Maßverkörperung 6 nimmt eine unbekannte Position zum Bett 2 und der Abtastbaueinheit A1 ein, und keines dieser Elemente kann relativ zu einem der anderen von der Stelle bewegt werden. Zur Ermittlung der Position der Abtastbaueinheit A1 relativ zur Referenzmarke R1 und damit des Schlittens 3 zum Bett 2 muß der Abstand der Referenzmarke R1 von der Abtastbaueinheit A1 bestimmt werden. Dazu wird nun manuell oder mittels eines nicht dargestellten Antriebes eine zusätzliche Referenz-Abtastbaueinheit RA relativ zur Maßverkörperung 6 verfahren. Sowohl die Referenz-Abtastbaueinheit RA als auch die Abtastbaueinheit A1 weisen Indikatorbausteine 7 und 8 auf. Wenn diese Indikatorbausteine 7 und 8 in Koinzidenz gebracht werden, bilden sie einen sogenannten Null-Indikator 78. Ein Null-Indikator kann die unterschiedlichsten Bauformen aufweisen, auch eine abgetastete Referenzmarke ist in gewissem Sinn ein Null-Indikator.

Nachdem einer der Null-Indikatoren (die Referenzmarke R1 oder der Null-Indikator 78, der durch die beiden Indikatorbausteine 7 und 8 gebildet wird) überfahren worden ist, wird die Auswerteeinrichtung auf einen bestimmten Positionswert, z. B. « Null » gesetzt. Anschließend wird die Referenz-Abtastbaueinheit RA in Richtung des anderen Null-Indikators verfahren und es werden von der Referenz-Abtastbaueinheit RA die dabei überfahrenen Teilungsinkremente ermittelt und in der Auswerteeinrichtung aufsummiert. Beim Überfahren des anderen Null-Indikators (R1 oder 78) wird diese Zählung gestoppt und der Abstand der Referenzmarke R1 vom Null-Indikator 78 — also der ersten Abtastbaueinheit A1 — wird als Bezugswert angezeigt.

Damit ist eine Bezugsposition reproduziert, ohne daß eines der Maschinen-Bauteile bewegt worden ist.

Es versteht sich, daß die Referenz-Abtastbaueinheit RA den Anforderungen entsprechend geführt werden muß. Das kann — wie im Beispiel gezeigt — innerhalb der Positionsmeßeinrichtung 1 geschehen, aber die Referenz-Abtastbaueinheit RA kann selbstverständlich auch außerhalb der Positionsmeßeinrichtung 1 direkt an der Maschine geführt werden.

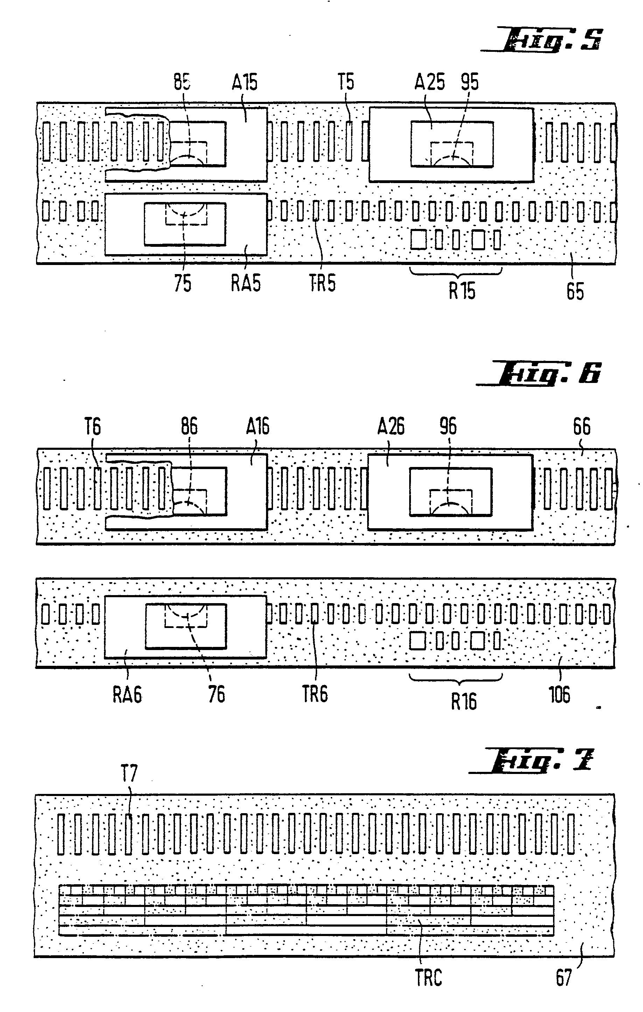

In Figur 5 ist eine der Figur 3 entsprechende Maßverkörperung 65 gezeigt, bei der neben der Inkrementalteilung T5 noch eine weitere Inkrementalteilung TR5 vorgesehen ist. Diese Inkrementalteilung TR5 kann, muß aber nicht die gleiche Gitterkonstante haben, wie die Inkrementalteilung T5. Falls beide Inkrementalteilungen T5 und TR5 die gleiche Gitterkonstante haben, empfiehlt es sich, anstelle zweier getrennter Inkrementalteilungen T5 und TR5 — abweichend von Figur 5 — eine einzige, breite Inkrementalteilung vorzusehen.

Zur Abtastung der Inkrementalteilung T5 sind außer der Abtastbaueinheit A15 noch weitere Abtastbaueinheiten vorgesehen, von denen hier nur die Abtastbaueinheit A25 gezeigt ist. Mehrere Abtastbaueinheiten, die eine gemeinsame Inkrementalteilung abtasten, sind bei sehr langen Maschinen üblich, die mehrere Maschinenschlitten in einer Achse unabhängig voneinander verfahren. Jede der Abtastbaueinheiten A15 und A25 hat demgemäß eine andere Bezugsposition inne, bezogen auf den Teilungsnullpunkt bzw. die Referenzmarke R15. Jede der Abtastbaueinheiten A15 bzw. A25 hat auch einen eigenen Indikatorbaustein 85 bzw. 95. Mit Hilfe einer entsprechend geschalteten Auswerteeinrichtung kann auf die vorbeschriebene Weise für jede Abtastbaueinheit A15, A25 usw. der Abstand von dem Teilungsnullpunkt bzw. der Referenzmarke R1 ermittelt werden.

Es liegt auch im Rahmen der Ausführung, mehrere Referenzmarken auf der Maßverkörperung vorzusehen, wenn die Verfahrwege für die Referenz-Abtastbaueinheit RA5 kurz gehalten werden sollen, oder wenn jeder der Abtastbaueinheiten A15, A25 usw. eine eigene Referenzmarke zugeordnet sein soll. Für diesen Fall müßten die einzelnen Referenzmarken codiert werden, d. h. von jeder der einzelnen Referenzmarken muß die individuelle Entfernung vom Teilungsnullpunkt bekannt sein und von der Referenz-Abtastbaueinheit RA5 decodiert werden können.

Das Beispiel in Figur 6 zeigt eine besonders vorteilhafte Ausgestaltung. Die Inkrementalteilung T6 ist auf einer Maßverkörperung 66 angeordnet und wird von Abtastbaueinheiten A16 und A26 abgetastet. Die Maßverkörperung 66 weist keine Referenzmarke auf und bildet damit eine inkrementale Positionsmeßeinrichtung in einfachster Bauweise. Sie kann, muß aber ebensowenig wie die vorbeschriebenen in einem Gehäuse gekapselt sein.

Die Bezugsposition der Abtastbaueinheiten A16 und A26 zum Teilungsnullpunkt wird mit Hilfe einer weiteren Positionsmeßeinrichtung ermittelt, die eine eigene Maßverkörperung 106 mit einer Inkrementalteilung TR6 und einer Referenzmarke R16 aufweist, die von einer Referenz-Abtastbaueinheit RA6 abgetastet werden. Die beiden Maßverkörperungen 66 und 106 bzw. die beiden entsprechenden Positionsmeßeinrichtungen sind an der Maschine so zueinander montiert, daß die Referenzmarke R16 der Maßverkörperung 106 genau dem Teilungsnullpunkt der Inkrementalteilung T6 der anderen Maßverkörperung 66 zugeordnet ist. Die Abtastbaueinheiten A16 und A26 sowie die Referenz-Abtastbaueinheit RA6 tragen ebenfalls Indikatorbausteine 86, 96 und 76. Die Bezugspunktermittlung gleicht den vorbeschriebenen Vorgängen, so daß zur Vermeidung von Wiederholungen hier nicht mehr näher darauf eingegangen werden muß.

Der zur Figur 6 geltend gemachte besondere Vorteil äußert sich darin, daß die erfindungsgemäße Positionsmeßeinrichtung 1 aus zwei einfachen, standardmäßigen inkrementalen Meßeinrichtungen aufgebaut werden kann, von denen lediglich eine eine Referenzmarke aufweisen muß, die zur Teilung der anderen absolut festgelegt ist. Durch entsprechende Justierung ist diese Forderung leicht zu erfüllen.

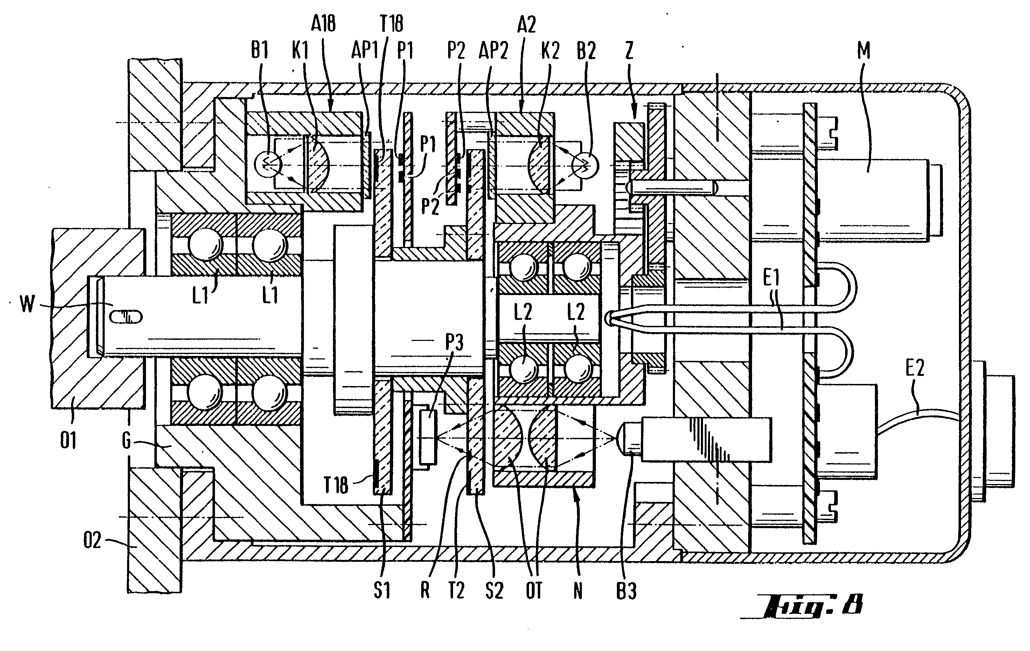

In Figur 7 ist schließlich noch ein Ausführungsbeispiel gezeigt, in dem die separate Teilung als Referenz-Codeteilung TRC ausgebildet ist. Anstelle einer Inkrementalteilung mit einer die Bezugsposition definierenden Referenzmarke ist eine sogenannte Absolutteilung als Referenz-Codeteilung TRC neben der zur eigentlichen Messung benutzten Inkrementalteilung T7 auf der Maßverkörperung 67 angebracht. Abtastbaueinheiten sind hier nicht gezeigt, weil sie den vorbeschriebenen entsprechen, wobei die Abtastung der Referenz-Codeteilung TRC mit einer entsprechend ausgebildeten Abtastbaueinheit erfolgt. Die Absolutposition — bezogen auf den Nullpunkt der Referenz-Codeteilung TRC — ist jedesmal sofort an der nicht gezeigten Auswertebaueinheit ablesbar, wenn die Indikatorbausteine der Abtastbaueinheiten für die Inkrementalteilung T7 mit dem Indikatorbaustein der Abtastbaueinheit für die Referenz-Codeteilung TRC koinzidiert. Die in der Figur 8 im Axialschnitt dargestellte inkrementale Winkelmeßeinrichtung ist mit einem Gehäuse G an einem zweiten zu messenden Objekt 02, beispielsweise an einem Gehäuse eines nicht gezeigten Industrieroboters befestigt. Im Inneren des Gehäuses G ist eine Welle W mittels erster Lager L1 drehbar gelagert und trägt eine erste Teilscheibe S 1 mit einer ersten Inkrementalteilung T18, die lichtelektrisch von einer im Gehäuse G befestigten ersten Abtasteinheit A 18 abgetastet wird, die eine erste Beleuchtungseinheit B1, einen ersten Kondensor K1, eine erste Abtastplatte AP1 mit zwei nicht dargestellten ersten Teilungsabtastfeldern sowie zwei erste Photoelemente P1 aufweist. Die erste Inkrementalteilung T18 in Form eines Radialgitters besteht für ein Durchlichtmeßverfahren aus lichtdurchlässigen und lichtundurchlässigen Streifen, die abwechselnd aufeinander folgen. Der ersten Inkrementalteilung T18 der ersten Teilscheibe S1 sind auf der ersten Abtastplatte AP1 die beiden ersten Teilungsabtastfelder zugeordnet, die zur Erkennung der Drehrichtung der ersten Teilscheibe S1 um ein Viertel der Teilungsperiode der ersten Inkrementalteilung T18 zueinander versetzt sind ; die Teilungen der beiden ersten Teilungsabtastfelder, denen jeweils ein erstes Photoelement P1 zugeordnet ist, stimmen mit der ersten Inkrementalteilung T18 überein. Die aus dem Gehäuse G herausragende Welle W ist mit einem ersten zu messenden Objekt 01 in Form eines Armes des Industrieroboters verbunden.

Beim eigentlichen Meßvorgang wird bei einer Drehung der Welle W und damit der ersten Teilscheibe S1 die erste Inkrementalteilung T18 relativ zu den beiden ersten Teilungsabtastfeldern auf der gehäusefesten ersten Abtastplatte AP1 gedreht. Der von der ersten Beleuchtungseinheit B1 ausgehende Lichtstrom wird durch die relativ zueinander bewegten Teilungen der ersten Inkrementalteilung T18 und der beiden ersten Teilungsabtastfelder moduliert und fällt auf die zugehörigen beiden ersten Photoelemente P1, die zwei um 90° zueinander phasenversetzte periodische Analogsignale liefern, die in einer nicht gezeigten Auswerteeinrichtung der Winkelmeßeinrichtung in Impulse umgeformt werden. Diese Impulse werden einem Zähler der Auswerteinrichtung zur Zählung zugeführt und können in einer nachgeschalteten Anzeigeeinheit als Positionsmeßwerte in digitaler Form angezeigt oder direkt einer numerischen Steuereinrichtung des Industrieroboters zugeleitet werden.

An der Welle W ist konzentrisch zur ersten Teilscheibe S1 eine zweite Teilscheibe S2 mit einer zweiten Inkrementalteilung T2 und mit einer der ersten Inkrementalteilung T18 absolut zugeordnete Referenzmarke R befestigt. Die zweite Inkrementalteilung T2 und die Referenzmarke R auf der zweiten Teilscheibe S2 werden ebenfalls lichtelektrisch von einer zweiten Abtasteinheit A2 abgetastet, die eine zweite Beleuchtungseinheit B2, einen zweiten Kondensor K2, eine zweite Abtastplatte AP2 sowie drei zweite Photoelemente P2 aufweist und im Gehäuse G auf der Welle W mittels zweiter Lager L2 relativ zur zweiten Teilscheibe S2 und zum Gehäuse G drehbar gelagert ist.

Auf der zweiten Abtastplatte AP2 der zweiten Abtasteinheit A2 sind der zweiten Inkrementalteilung T2 der zweiten Teilscheibe S2 zwei nicht dargestellte zweite Teilungsabtastfelder zugeordnet, die zur Erkennung der Drehrichtung der zweiten Abtastplatte AP2 um ein Viertel der Teilungsperiode der zugehörigen zweiten Inkrementalteilung T2 zueinander versetzt sind ; die Teilungen der beiden zweiten Teilungsabtastfelder stimmen mit der zweiten Inkrementalteilung T2 überein. Den beiden zweiten Teilungsabtastfeldern sind jeweils ein zweites Photoelement P2 in der zweiten Abtasteinheit A2 zugeordnet.

Die Referenzmarke R der zweiten Teilscheibe S2 besteht aus einer Strichgruppe mit einer unregelmäßigen Strichverteilung, der auf der zweiten Abtastplatte AP2 der zweiten Abtasteinheit A2 ein Referenzmarkenabtastfeld mit einer identischen Strichverteilung zugeordnet ist. Dem Referenzmarkenabtastfeld auf der zweiten Abtastplatte AP2 ist ein zweites Photoelement P2 in der zweiten Abtasteinheit A2 zugeordnet.

Im Gehäuse G ist als Indikatorbaustein ein lichtelektrischer Nullsensor N mit einer dritten Beleuchtungseinheit B3 und mit einem dritten Photoelement P3 befestigt. Mit der auf der Welle W drehbar gelagerten zweiten Abtasteinheit A2 ist als Indikatorbaustein eine Abbildungsoptik OT befestigt, die bei einer Drehung der zweiten Abtasteinheit A2 in einer bestimmten Position zwischen der dritten Beleuchtungseinheit B3 und dem dritten Photoelement P3 den von der dritten Beleuchtungseinheit B3 ausgehenden Lichtstrom auf das dritte Photoelement P3 fokussiert, so daß das dritte Photoelement P3 ein Nullsignal abgibt, das eine bestimmte Absolutposition der drehbaren zweiten Abtasteinheit A2 bezüglich des Gehäuses G kennzeichnet.

Wie eingangs bereits erwähnt, ist es bei einer inkrementalen Positionsmeßeinrichtung von großer Bedeutung, zu Beginn einer Messung eine Bezugsposition für die erste Teilscheibe S1 zu bestimmen, die als Ausgangsposition für die Messung dient und die auch nach Störfällen wieder reproduziert werden kann.

Es wird davon ausgegangen, daß vor Beginn einer Messung oder auch im Störfall, bei dem — beispielsweise durch Stromausfall — bekanntlich bei inkrementalen Positionsmeßeinrichtungen der Positionsmeßwert verloren geht, sich die relativ zueinander beweglichen, zu messenden Objekte 01, 02 im Stillstand befinden. Die erste Teilscheibe S1 befindet sich also in einer Position, in der die Lage ihres Teilungsnullpunktes relativ zum Gehäuse G nicht bekannt ist.

Zur Gewinnung dieser Bezugsposition muß nun die momentane Position der ersten Teilscheibe S1 bezüglich des Gehäuses G bestimmt werden. Zu diesem Zweck wird die Eichbetriebsart eingeschaltet, indem die zweite Abtasteinheit A2 mitsamt der Abbildungsoptik OT des lichtelektrischen Nullsensors N von einem im Gehäuse G befestigten Motor M über ein Getriebe Z in Drehung versetzt wird. Zuerst möge beispielsweise die Abbildungsoptik OT des Nullsensors N in Koinzidenz mit der dritten Beleuchtungseinheit B3 und dem dritten Photoelement P3 gelangen, so daß das dritte Photoelement P3 ein Nullsignal liefert, das den Zähler der Auswerteeinrichtung auf den Wert Null setzt und ihn gleichzeitig startet. Von diesem Zeitpunkt an werden die zweite Inkrementalteilung T2 der stillstehenden zweiten Teilscheibe S2 von den beiden zweiten Teilungsabtastfeldern auf der sich drehenden zweiten Abtastplatte AP2 abgetastet und die von den zugehörigen zweiten Photoelementen P2 erzeugten periodischen Analogsignale ausgewertet und die Zählimpulse dem Zähler zugeführt.

Nach dem Zählerstart und dem Beginn der Zählung der Teilungsinkremente der zweiten Inkrementalteilung T2 wird irgendwann die Referenzmarke R der stillstehenden zweiten Teilscheibe S2 vom zugehörigen Referenzmarkenabtastfeld auf der sich drehenden zweiten Abtastplatte AP2 abgetastet und durch ein Signal des zugehörigen zweiten Photoelements P2 der zweiten Abtasteinheit A2 der Zähler der Auswerteeinrichtung gestoppt. Der im Zähler ermittelte Zählwert für den Verstellweg der zweiten Abtasteinheit A2 in Form des Drehwinkels zwischen dem Nullsensor N und der Referenzmarke R auf der zweiten Teilscheibe S2 gibt direkt den absoluten Positionswert an, den die erste Teilscheibe S1 und die zweite Teilscheibe S2 momentan zum Gehäuse G einnehmen, da die Referenzmarke R direkt den Teilungsnullpunkt der zugehörigen ersten Inkrementalteilung T18 auf der ersten Teilscheibe S1 darstellt ; der Motor M wird stillgesetzt und der Eichvorgang ist damit beendet.

Vom Zeitpunkt der Abtastung der Referenzmarke R auf der zweiten Teilscheibe S2 an kann der Zähler für den eigentlichen Meßvorgang wieder von den Zählimpulsen gespeist werden, die bei der Drehung der ersten Teilscheibe S1 bezüglich des Gehäuses G durch die Abtastung der ersten Inkrementalteilung T18 mittels der beiden ersten Teilungsabtastfelder auf der gehäusefesten ersten Abtastplatte AP1 und mittels der beiden zugehörigen ersten Photoelemente P1 der ersten Abtasteinheit A18 erzeugt werden. Beim Auftreten von Störungen, beispielsweise bei Stromausfall, kann die Bezugsposition der ersten Teilscheibe S1 bezüglich des Gehäuses G sinngemäß mittels des vorbeschriebenen Eichvorgangs reproduziert werden, auch wenn die erste Teilscheibe S1 nicht aus ihrer Momentanposition heraus bewegt werden kann, weil beispielsweise gerade ein Werkzeug, das über den Arm des Industrieroboters mit der Welle W in Wirkverbindung steht, sich im Eingriff an einem zu bearbeitenden Werkstück befindet, wenn die Störung auftritt.

Die Drehung der zweiten Abtasteinheit A2 erfolgt für den Eichvorgang oder den Reproduktionsvorgang wegen der mit der zweiten Beleuchtungseinheit B2 und den zweiten Photoelementen P2 verbundenen elektrischen Leitungen E1 nur über einen Schwenkbereich, der etwas größer als ein Vollkreis ist, und zwar in beiden Drehrichtungen. Die Winkelmeßeinrichtung ist über elektrische Leitungen E2 mit der Auswerteeinrichtung und einer Stromversorgung verbunden.

In nicht dargestellter Weise kann die Stromversorgung der zweiten Abtasteinheit A2 statt durch elektrische Leitungen E1 auch durch Schleifringe erfolgen ; in diesen Fällen kann die zweite Abtasteinheit A2 in beiden Drehrichtungen um beliebig viele Umdrehungen gedreht werden.

Auf der zweiten Teilscheibe S2 können anstelle der Referenzmarke R auch mehrere Referenzmarken vorgesehen sein, die dann allerdings zur gegenseitigen Unterscheidung einer Codierung bedürfen. Derartige codierte Referenzmarken sind beispielsweise in der DE-A 30 39 483 beschrieben. Zur Abtastung der Codemarken für diese Referenzmarken muß auf der zweiten Abtastplatte AP2 ein zugehöriges Codemarkenabtastfeld vorhanden sein. Das Vorsehen nur einer Referenzmarke auf der zweiten Teilscheibe S2 besitzt den Vorteil einer besonders einfachen Herstellung der zweiten Teilscheibe S2, da eine einzige Referenzmarke keiner Codierung zur Unterscheidung bedarf. Wie nachstehend beschrieben, weist das Vorsehen mehrerer Referenzmarken auf der zweiten Teilscheibe S2 den Vorteil auf, daß von der zweiten Abtasteinheit A2 zur Abtastung der nächstgelegenen Referenzmarke nur kleine Winkelwege beim Eichvorgang oder beim Reproduktionsvorgang zurückgelegt werden müssen, und zwar in beiden Drehrichtungen. Dieser Reversierbetrieb durch ein als Reversiergetriebe ausgebildetes Getriebe Z ermöglicht auf schnelle und einfache Weise zwischen einzelnen Bearbeitungsabläufen beispielsweise programmgesteuerte Überprüfungen der jeweiligen Bezugspositionen.

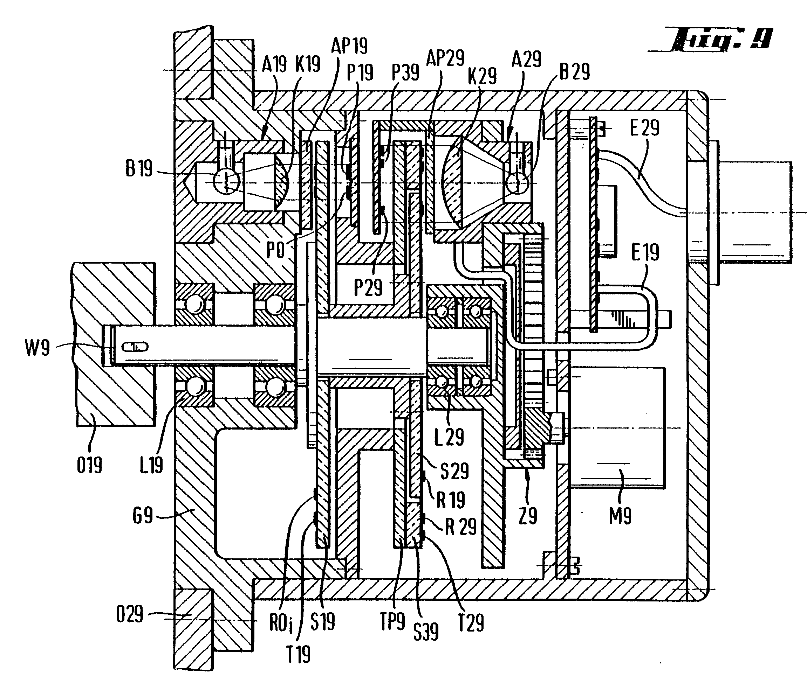

Die in Figur 9 im Axialschnitt dargestellte inkrementale Winkelmeßeinrichtung entspricht in Grundaufbau und Wirkungsweise der in Figur 8 gezeigten Meßeinrichtung, so daß zur Vermeidung von Wiederholungen auf eine nochmalige Beschreibung verzichtet werden kann. Äquivalente Bauelemente tragen gleiche Bezugszeichen mit einer der Figur 9 entsprechenden Kennziffer « 9 ».

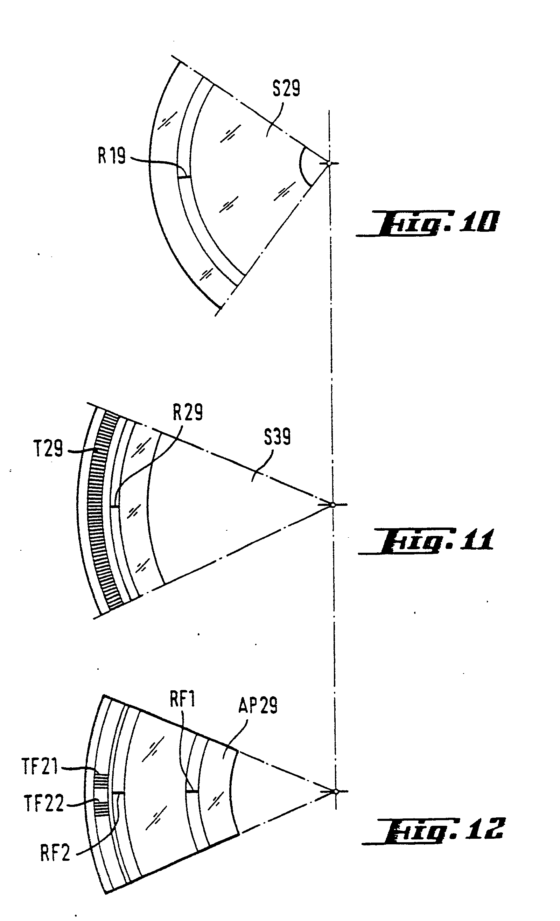

An der Welle W9 ist konzentrisch zur ersten Teilscheibe S19 eine zweite Teilscheibe S29 mit einer der ersten Inkrementalteilung T19 der ersten Teilscheibe S19 absolut zugeordneten ersten Referenzmarke R19 befestigt (Figur 10). In der Ebene der zweiten Teilscheibe S29 ist an ihrer Peripherie konzentrisch eine kreisringförmige dritte Teilscheibe S39 angeordnet, die über eine transparente Trägerplatte TP9 am Gehäuse G9 befestigt ist und eine zweite Inkrementalteilung T29 und eine der zweiten Inkrementalteilung T29 absolut zugeordnete zweite Referenzmarke R29 aufweist (Figur 11).

Die erste Referenzmarke R19 der zweiten Teilscheibe S29 sowie die zweite Inkrementalteilung T29 und die zweite Referenzmarke R29 der dritten Teilscheibe S39 werden ebenfalls lichtelektrisch von einer zweiten Abtasteinrichtung A29 abgetastet, die eine zweite Beleuchtungseinheit B29, einen zweiten Kondensor K29, eine zweite Abtastplatte AP29 sowie ein zweites Photoelement P29 und dritte Photoelemente P39 aufweist und im Gehäuse G9 auf der Welle W9 mittels Lager L29 relativ zur zweiten Teilscheibe S29 und zur dritten Teilscheibe S39 drehbar gelagert ist.

Auf der zweiten Abtastplatte AP29 der zweiten Abtasteinrichtung A29 sind der zweiten Inkrementalteilung T29 der dritten Teilscheibe S39 zwei zweite Teilungsabtastfelder TF21, TF22 zugeordnet, die jeweils um ein Viertel der Teilungsperiode der zugehörigen zweiten Inkrementalteilung T29 zur Erkennung der Drehrichtung der zweiten Abtastplatte AP29 zueinander versetzt sind ; die Teilungen der beiden zweiten Teilungsabtastfelder TF21, TF22 stimmen mit der zweiten Inkrementalteilung T29 überein.

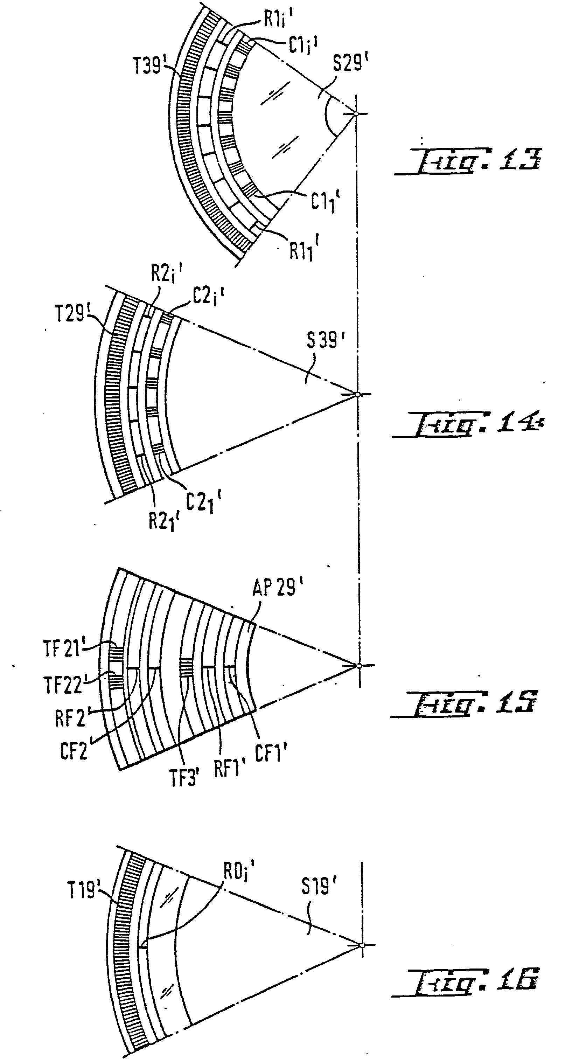

Die erste Referenzmarke R19 der zweiten Teilscheibe S29 und die zweite Referenzmarke R29 der dritten Teilscheibe S39 bestehen jeweils aus identischen Strichgruppen mit einer bestimmten unregelmäßigen Strichverteilung, denen auf der zweiten Abtastplatte AP29 der zweiten Abtasteinrichtung A29 ein erstes Referenzmarkenabtastfeld RF1 und ein zweites Referenzmarkenabtastfeld RF2 mit einer identischen Strichverteilung zugeordnet sind (Figur 12). Dem ersten Referenzmarkenabtastfeld RF1 auf der zweiten Abtastplatte AP29 sind ein zweites Photoelement P29 und den beiden zweiten Teilungsabtastfeldern TF21, TF22 und dem zweiten Referenzmarkenabtastfeld RF2 jeweils dritte Photoelemente P39 in der zweiten Abtasteinrichtung A29 zugeordnet.

Auch bei dieser Winkelmeßeinrichtung muß zur Gewinnung einer Bezugsposition die momentane Position der ersten Teilscheibe S19 bezüglich des Gehäuses G9 bestimmt werden. Zu diesem Zweck wird die Eichbetriebsart eingeschaltet, indem die zweite Abtasteinrichtung A29 von einem im Gehäuse G9 befestigten Motor M9 über ein Getriebe Z9 in Drehung versetzt wird. Zuerst möge beispielsweise das zweite Referenzmarkenabtastfeld RF2 auf der sich drehenden zweiten Abtastplatte AP29 die zweite Referenzmarke R29 auf der gehäusefesten dritten Teilscheibe S39 abtasten, so daß das zugehörige dritte Photoelement P39 der sich drehenden zweiten Abtasteinrichtung A29 ein Signal liefert, das den Zähler der Auswerteinrichtung auf den Wert Null setzt und ihn gleichzeitig startet. Von diesem Zeitpunkt an werden die von den zugehörigen dritten Photoelementen P39 bei der Abtastung der zweiten Inkrementalteilung T29 der gehäusefesten dritten Teilscheibe S39 mittels der zugehörigen zweiten Teilungsabtastfelder TF21, TF22 auf der sich drehenden zweiten Abtastplatte AP29 erzeugten periodischen Analogsignale ausgewertet und die Zählimpulse dem Zähler zugeführt.

Nach dem Zählerstart und dem Beginn der Zählung der Teilungsinkremente der zweiten Inkrementalteilung T29 wird irgendwann die erste Referenzmarke R19 auf der stillstehenden zweiten Teilscheibe S29 vom zugehörigen ersten Referenzmarkenabtastfeld RF1 auf der sich drehenden zweiten Abtastplatte AP29 abgetastet und durch ein Signal des zugehörigen zweiten Photoelements P29 der zweiten Abtasteinrichtung A29 der Zähler der Auswerteinrichtung gestoppt. Der im Zähler ermittelte Zählwert für den Verstellweg der zweiten Abtasteinrichtung A29 in Form des Drehwinkels zwischen der ersten Referenzmarke R19 und der zweiten Referenzmarke R29 gibt direkt den absoluten Positionswert an, den die erste Teilscheibe S19 momentan zum Gehäuse G9 einnimmt, da die beiden Referenzmarken R19, R29 direkt den Teilungsnullpunkt der zugehörigen Inkrementalteilungen T19, T29 darstellen. Die zweite Abtasteinrichtung A29 wird wieder in etwa in ihre Ausgangslage zurückgedreht und der Motor M9 stillgesetzt ; der Eichvorgang ist damit beendet.

Vom Zeitpunkt der Abtastung der ersten Referenzmarke R19 an kann der Zähler für den eigentlichen Meßvorgang wieder von den Zählimpulsen gespeist werden, die bei der Drehung der ersten Teilscheibe S19 bezüglich des Gehäuses G9 durch die Abtastung der ersten Inkrementalteilung T19 mittels der beiden ersten Teilungsabtastfelder auf der gehäusefesten ersten Abtastplatte AP19 und mittels der beiden zugehörigen ersten Photoelemente P19 der ersten Abtasteinrichtung A19 erzeugt werden. Beim Auftreten von Störungen, beispielsweise bei Stromausfall, kann die Bezugsposition für die erste Teilscheibe S19 sinngemäß mittels des vorbeschriebenen Eichvorgangs reproduziert werden, auch wenn die erste Teilscheibe S19 nicht aus ihrer Momentanposition heraus bewegt werden kann, weil beispielsweise gerade ein Werkzeug, das über den Arm des Industrieroboters mit der Welle W9 in Wirkverbindung steht, sich im Eingriff an einem zu bearbeitenden Werkstück befindet, wenn die Störung auftritt.

Das Vorsehen nur einer ersten Referenzmarke R19 auf der zweiten Teilscheibe S29 und nur einer zweiten Referenzmarke R29 auf der dritten Teilscheibe S39 besitzt den Vorteil einer besonders einfachen Herstellung der beiden Teilscheiben S29, S39.

Die Winkelmeßeinrichtung kann auch mit einer Vielzahl von Referenzmarken $R_i$ ausgestattet sein. Die entsprechend gestalteten Teilscheiben sind in den Figuren 13, 14, 15 beschrieben. An der Welle W9 ist konzentrisch zur ersten Teilscheibe S19' eine zweite Teilscheibe S29' mit der ersten Inkrementalteilung T19' der ersten Teilscheibe S19' absolut zugeordneten ersten Referenzmarken $R1_i'(i=1,2,...n)$ befestigt, denen zur Identifizierung jeweils erste Codemarken $C1_i'$ zugeordnet sind (Figur 13). In der Ebene der zweiten Teilscheibe S29' ist an ihrer Peripherie konzentrisch eine kreisringförmige dritte Teilscheibe S39' angeordnet, die über eine transparente Trägerplatte TP9 am Gehäuse G9 befestigt ist und eine zweite Inkrementalteilung T29' und der zweiten Inkrementalteilung T29' absolut zugeordnete zweite Referenzmarken $R2_i'(i=1,2,...n)$ aufweist, denen zur Identifizierung jeweils zweite Codemarken $C2_i'$) zugeordnet sind (Figur 14).

Die ersten Referenzmarken $R1_i'$ und die zuge-

hörigen ersten Codemarken C1$_i'$ der zweiten Teilscheibe S29' sowie die zweite Inkrementalteilung T29', die zweiten Referenzmarken R2$_i'$ und die zugehörigen zweiten Codemarken C2$_i'$ werden ebenfalls lichtelektrisch von einer zweiten Abtasteinrichtung A29 abgetastet, die wie beschrieben ausgestaltet und relativ zur zweiten Teilscheibe S29' und zur dritten Teilscheibe S39' drehbar gelagert ist.

Die ersten Referenzmarken R1$_i'$ Der zweiten Teilscheibe S29' und die zweiten Referenzmarken R2$_i'$ der dritten Teilscheibe S39' bestehen jeweils aus identischen Strichgruppen mit einer bestimmten unregelmäßigen Strichverteilung, denen auf der zweiten Abtastplatte AP29' der zweiten Abtasteinrichtung A29 ein erstes Referenzmarkenabtastfeld RF1' und ein zweites Referenzmarkenabtastfeld RF2' mit einer identischen Strichverteilung zugeordnet sind (Figur 15). Die Absolutpositionen der ersten Referenzmarken R1$_i'$ zum Teilungsnullpunkt der ersten Inkrementalteilung T19' werden durch die zugehörigen ersten Codemarken C1$_i'$ und die Absolutpostionen der zweiten Referenzmarken R2$_i'$ zum Teilungsnullpunkt der zweiten Inkrementalteilung T29' durch die zugehörigen zweiten Codemarken C2$_i'$ gekennzeichnet, die jeweils die Absolutpositionen der zugehörigen ersten Referenzmarken R1$_i'$ und zweiten Referenzmarken R2$_i'$ als codierte Information, beispielsweise als sogenannten Barcode enthalten. Den ersten Codemarken C1$_i'$ sind auf der zweiten Abtastplatte AP29' ein erstes Codemarkenabtastfeld CF1' und den zweiten Codemarken C2$_i'$ ein zweites Codemarkenabtastfeld CF2' zugeordnet. Dem ersten Referenzmarkenabtastfeld RF1' und dem ersten Codemarkenabtastfeld CF1' auf der zweiten Abtastplatte AP29' sind jeweils zweite Photoelemente P29 und den beiden zweiten Teilungsabtastfeldern TF21', TF22', dem zweiten Referenzmarkenabtastfeld RF2' und dem zweiten Codemarkenabtastfeld CF2' jeweils dritte Photoelemente P39 in der zweiten Abtasteinrichtung A29 zugeordnet.

Zur Gewinnung der Bezugsposition muß nun die momentane Position der ersten Teilscheibe S19' bezüglich des Gehäuses G9 bestimmt werden. Zu diesem Zweck wird, wie bereits beschrieben, die Eichbetriebsart eingeschaltet.

Zur Gewinnung der Bezugsposition hat das erste Codemarkenabtastfeld CF1' auf der zweiten Abtastplatte AP29' aus der der abgetasteten ersten Referenzmarke R1$_i'$ zugehörigen ersten Codemarke C1$_i'$ den absoluten Positionswert der ersten Referenzmarke R1$_i'$ abgelesen. Bei der Abtastung der zweiten Referenzmarke R2$_i'$ wurde gleichzeitig aus der zugeordneten zweiten Codemarke C2$_i'$ vom zugehörigen zweiten Codemarkenabtastfeld CF2' auf der zweiten Abtastplatte AP29' der absolute Positionswert dieser zweiten Referenzmarke R2$_i'$ abgelesen. Diese beiden absoluten Positionswerte der ersten Referenzmarke R1$_i'$ und der zweiten Referenzmarke R2$_i'$ werden in die Auswerteeinrichtung eingespeist. Dem absoluten Positionswert der ersten Referenzmarke R1$_i'$ werden der absolute Positionswert der zweiten Referenzmarke R2$_i'$ sowie der Zählwert im Zähler, der dem Winkelabstand zwischen der ersten Referenzmarke R1$_i'$ und der zweiten Referenzmarke R2$_i'$ entspricht, vorzeichenrichtig überlagert. In der Auswerteeinrichtung steht nun der absolute Positionswert an, den die erste Teilscheibe S19' zum Gehäuse G9 momentan einnimmt. Die zweite Abtasteinrichtung A29 wird wieder in etwa in ihre Ausgangslage zurückgedreht und der Motor M9 stillgesetzt ; der Eichvorgang ist damit beendet.

Es besteht die Möglichkeit, die zweite Abtasteinrichtung A29 aus zwei Abtasteinheiten aufzubauen. In diesem Fall kann die transparente Trägerplatte TP9 direkt als dritte Teilscheibe S39' ausgebildet werden, so daß die kreisringförmige dritte Teilscheibe S39', die schwierig herzustellen ist, entfallen kann.

Auf der zweiten Teilscheibe S29' gemäß Figur 13 ist noch eine dritte Inkrementalteilung T39' vorgesehen, die von einem dritten Teilungsabtastfeld TF3' auf der sich drehenden zweiten Abtastplatte AP29' bei einem Eichvorgang oder einem Reproduktionsvorgang abgetastet wird. Das bei dieser Abtastung vom zugehörigen zweiten Photoelement P29 der zweiten Abtasteinrichtung A29 gewonnene Analogsignal wird mit dem aus der ersten Referenzmarke R1$_i'$ gewonnenen Referenzsignal logisch verknüpft, so daß dieses Referenzsignal zur nachfolgenden Auswertung verbessert werden kann.

Da die erste Teilscheiben S19' und die zweite Teilscheibe S29' in der Praxis kaum genau konzentrisch montiert werden können, kann es durch Exzentrizitätsfehler jedoch zu Fehlern kommen.

Wie aus Figur 16 ersichtlich, ist zur Eliminierung eines Exzentrizitätsfehlers zwischen der ersten Teilscheibe S19' und der zweiten Teilscheibe S29' auch auf der ersten Teilscheibe S19' wenigstens eine Referenzmarke R0$_i'$ angeordnet, durch deren Abtastung mit der ortsfesten ersten Abtasteinrichtung A19 der vorab ermittelte Abstand zwischen der Referenzmarke R1$_i'$ und der weiteren Referenzmarke R2$_i'$ um den Exzentrizitätsfehler korrigiert wird.

In der Praxis ist die vorbeschriebene Eichung bis auf einige Bit genau, was sich in Ungenauigkeit der letzten Stellen des Meßergebnisses in der Anzeige bemerkbar macht.

Diese Ungenauigkeit rührt von der Exzentrizität her, die bei der Montage der ersten und der zweiten Teilscheibe S19' und S29' praktisch nicht auszuschliessen ist.

Die Lage der ersten Referenzmarke R1$_i'$ zur Inkrementalteilung T19' wird als Teilungsnullpunkt in der Regel so gewählt, daß beim Eichvorgang die letzten Stellen des Meßergebnisses als « Null » erscheinen sollen. Weichen nun die letzten Stellen des Meßergebnisses von « Null » ab, so ist dies der Exzentrizitätsfehler.

Die auf der ersten Teilscheibe S19' vorgesehene zusätzliche Referenzmarke R0$_i'$ läßt sich bereits bei der Teilungsherstellung so genau auf den Teilungsnullpunkt platzieren, daß sie tatsächlich und ohne Fehler den Teilungsnullpunkt festlegt.

Vorteilhafterweise werden konzentrisch zur Inkrementalteilung T19' mehrere zusätzliche Referenzmarken R0$_i$', z. B. zweiundsiebzig auf der Teilscheibe S19' angebracht, so daß nach jeweils fünf Winkelgraden immer eine der Referenzmarken R0$_i$' aufscheint.

Sobald sich die Teilscheibe S19' um maximal fünf Winkelgrade gedreht hat, wird von der Abtasteinrichtung A19 an einer der Referenzmarken R0$_i$' ein Impuls erzeugt, der die letzten Stellen des Meßergebnisses auf « Null » setzt.

Wie bereits erwähnt, wurde ja der Zähler durch die Referenzmarke R1$_i$' wieder in Gang gesetzt, so daß der Winkelweg der Teilscheibe S19' erfaßt wurde, wobei der Exzentrizitätsfehler mitgeschleppt wird. Wenn bei der Eichung beispielsweise ein Meßwert von 51, 38 Grad ermittelt wurde, so ist die Lage der Teilscheibe S19' auf 0,38 Grad fehlerhaft bestimmt worden, da ja die Referenzmarke R1$_i$' auf den Teilungsnullpunkt bezogen sein soll.

Wird nun nach der Eichung wieder mit der Zählung begonnen, so erscheint bei absolut 55,00 Grad eine der Referenzmarken R0$_i$'. Die Anzeige zeigt jedoch den Meßwert 55,38 Grad an. In diesem Moment werden die letzten Stellen auf « Null » gesetzt, und die Messung ist damit um den Exzentrizitätsfehler korrigiert.

Es liegt im Rahmen der Äusgestaltung, wenn zum Eichvorgang nicht die beschriebenen Referenzmarken R1$_i$' und R2$_i$' herangezogen werden, sondern ein anderer, beliebiger Nullindikator benutzt wird und Exzentrizitätsfehler nicht grundsätzlich ausgeschlossen sind.

Anstelle der lichtelektrischen Nullindikatoren können auch Nullindikatoren auf magnetischer, kapazitiver oder induktiver Basis verwendet werden.

Wie schon die unterschiedlichen Teilungsausbildungen zeigen, ist die Äusgestaltung nicht auf rein inkrementale Positionsmeßeinrichtungen beschränkt, sondern es können auch Mischformen zur Anwendung kommen.

Unter dem physikalischen Abtastprinzip können auch magnetische, induktive, kapazitive, piezoelektrische und natürlich optoelektrische Positionsmeßeinrichtungen in Auf- oder Durchlichtversionen und deren Kombinationen verwendet werden.

## Patentansprüche

1. Positionsmeßeinrichtung zur Messung der Lage zweier relativ zueinander beweglicher Objekte (2, 3) und zum Reproduzieren einer Bezugsposition bei beliebiger unbekannter Momentanposition der zu messenden Objekte (2, 3), bei der wenigstens eine Maßverkörperung (6, 65, 66, 67) mit dem ersten Objekt (3) und wenigstens eine Abtastbaueinheit (A1, A15, A16) zur Abtastung einer ersten Inkrementalteilung (T1, T5, T6, T7) einer Maßverkörperung (6, 65, 66, 67) fest mit dem zweiten Objekt (2) verbunden ist, und bei der der ersten Inkrementalteilung (T1, T5, T6, T7) der Maßverkörperung (6, 65, 66) wenigstens eine Referenzmarke (R1, R15, R16) oder Referenz-Codeteilung (TRC) fest zugeordnet ist, dadurch gekennzeichnet, daß als Referenz-Abtastbaueinheit (RA, RA5, RA6) wenigstens eine weitere Abtastbaueinheit vorgesehen ist, die unabhängig von der wenigstens einen Abtastbaueinheit (A1, A15, A16) und somit von den beiden Objekten (2, 3) relativ zur Maßverkörperung (6, 65, 66, 106, 67) bewegbar ist, und durch Abtastung der ersten Inkrementalteilung (T1) oder einer weiteren Teilung (TR5, TR6, TRC) den Abstand der wenigstens einen Abtastbaueinheit (A1, A15, A16) von der wenigstens einen Referenzmarke (R1, R15, R16) oder dem Nullpunkt der Referenz-Codeteilung (TRC) ermittelt.

2. Positionsmeßeinrichtung nach Anspruch 1, dadurch gekennzeichnet, daß die erste Abtastbaueinheit (A1, A15, A16) und die Referenz-Abtastbaueinheit (RA, RA5, RA6) Indikatorbausteine (8, 7 ; 85, 75 ; 86, 76) aufweisen, die bei Koinzidenz einen Null-Indikator (78) bilden.

3. Positionsmeßeinrichtung nach Anspruch 1, dadurch gekennzeichnet, daß zur Abtastung der ersten Inkrementalteilung (T5, T6) der Maßverkörperung (65, 66) mehrere unabhängig voneinander bewegliche Abtastbaueinheiten (A15, A16, A25, A26) mit Indikatorbausteinen (85, 86, 95, 96) vorgesehen sind, und daß der Indikatorbaustein (75, 76) der Referenz-Abtastbaueinheit (RA5, RA6) mit jeder der anderen Abtastbaueinheiten (A15, A16, A25, A26) in Koinzidenz bringbar ist.

4. Positionsmeßeinrichtung nach Anspruch 1, dadurch gekennzeichnet, daß die Referenz-Abtastbaueinheit (RA, RA5, RA6) manuell oder selbsttätig mittels eines separaten Antriebes relativ zur Maßverkörperung (6, 65, 106) verschiebbar ist.

5. Positionsmeßeinrichtung nach Anspruch 1, dadurch gekennzeichnet, daß für die Referenz-Abtastbaueinheit (RA5, RA6) die weitere separate Teilung (TR5, TR6) mit Referenzmarke (R15, R16) oder die Referenz-Codeteilung (TRC) vorgesehen ist, wobei die Referenzmarke (R15, R16) bzw. der Nullpunkt der Referenz-Codeteilung (TRC) jedoch der ersten Inkrementalteilung (T5, T6, T7) absolut zugeordnet ist.

6. Positionsmeßeinrichtung nach Anspruch 1 und 5, dadurch gekennzeichnet, daß die weitere, separate Teilung (TR6) auf einer eigenen, zweiten Maßverkörperung (106) angeordnet ist.

7. Positionsmeßeinrichtung nach Anspruch 1, 3 und 6, dadurch gekennzeichnet, daß zur Abtastung der ersten Inkrementalteilung (T5, T6) mehrere unabhängige voneinander bewegliche Abtastbaueinheiten (A15, A16, A25, A26) vorgesehen sind, daß zur Abtastung der weiteren, separaten Teilung (TR5, TR6) mit Referenzmarke (R15, R16) die Referenz-Abtastbaueinheit (RA5, RA6) vorgesehen ist, deren Indikatorbaustein (75, 76) mit jedem Indikatorbaustein (85, 86, 95, 96) der jeweiligen Abtastbaueinheit (A15, A16, A25, A26) in Koinzidenz bringbar ist.

8. Positionsmeßeinrichtung nach Anspruch 1 und 5, dadurch gekennzeichnet, daß die Abtastbaueinheiten der ersten Inkrementalteilung (T7) Indikatorbausteine aufweisen, die mit einem Indikatorbaustein der Abtastbaueinheit für die Referenz-Codeteilung (TRC) in Koinzidenz bringbar sind.

9. Positionsmeßeinrichtung nach Anspruch 1, dadurch gekennzeichnet, daß die Abstandsermittlung während der Bewegung eines der Objekte stattfindet.

10. Positionsmeßeinrichtung nach Anspruch 1, 5, 6 oder 8, dadurch gekennzeichnet, daß jeweils eine der Teilungen mit ihrer zugehörigen Abtastbaueinheit eine Notfunktion bei Ausfall der anderen übernimmt.

11. Positionsmeßeinrichtung nach Anspruch 1 und 6 zur Messung von Winkeln, dadurch gekennzeichnet, daß die zweite Maßverkörperung in Form einer Teilscheibe (S2) konzentrisch mit der ersten Maßverkörperung ebenfalls in Form einer Teilscheibe (S1), fest verbunden ist und daß die Referenz-Abtastbaueinheit (A2) mitsamt einem Indikatorbaustein (OT) konzentrisch zur zweiten Teilscheibe (S2) drehbar gelagert und mittels eines Antriebes (M, Z) verdrehbar ist.

12. Positionsmeßeinrichtung nach Anspruch 11 zur Messung von Winkeln, dadurch gekennzeichnet, daß ein Nullindikator (N) aus einer Beleuchtungseinheit (B3) und einem zugeordneten Photoelement (P3) besteht, die mit dem zweiten Objekt (02) fest verbunden sind und zwischen denen als Indikatorbaustein eine Abbildungsoptik (OT) zum Abbilden der Beleuchtungseinheit (B3) auf das Photoelement (P3) drehbar gelagert ist.

13. Positionsmeßeinrichtung nach Anspruch 1 und 6 zur Messung von Winkeln, gekennzeichnet durch folgende Merkmale :

a) ein mit der ersten Inkrementalteilung (T19) versehenen ersten Teilungsträger (S19) ist mit einem zweiten Teilungsträger (S29) fest verbunden, der wenigstens eine der ersten Inkrementalteilung (T19) absolut zugeordnete erste Referenzmarke (R1$_i$) (i=1,2,...,n) aufweist ;

b) mit dem zweiten Objekt (029) ist ein dritter Teilungsträger (S39) fest verbunden, der eine mit wenigstens einer zweiten Referenzmarke (R2$_i$) versehene zweite Teilung (T29) aufweist ;

c) zum Abtasten der wenigstens einen ersten Referenzmarke (R1$_i$) des zweiten Teilungsträgers (S29) und der mit der wenigstens einen zweiten Referenzmarke (R2$_i$) versehenen zweiten Teilung (T29) des dritten Teilungsträgers (S39) ist eine zweite Abtastbaueinheit (A29) relativ zum zweiten Teilungsträger (S29) und relativ zum dritten Teilungsträger (S39) verstellbar ;

d) der Verstellweg der zweiten Abtastbaueinheit (A29) entsprechend dem Abstand zwischen der ersten Referenzmarke (R1$_i$) und der zweiten Referenzmarke (R2$_i$) ist registrierbar.

14. Positionsmeßeinrichtung nach Anspruch 13 zur Messung von Winkeln, gekennzeichnet durch folgende Merkmale :

a) der zweite Teilungsträger in Form einer zweiten Teilscheibe (S29) ist mit dem ersten Teilungsträger in Form einer ersten Teilscheibe (S19) konzentrisch fest verbunden ;

b) der dritte Teilungsträger in Form einer kreisringförmigen dritten Teilscheibe (S39) ist konzentrisch zur zweiten Teilscheibe (S29) fest mit dem zweiten Objekt (O29) verbunden ;

c) die zweite Abtastbaueinheit (A29) ist konzentrisch zur zweiten Teilscheibe (S29) und zur dritten Teilscheibe (S39) mittels eines Antriebs (M9, Z9) verdrehbar.

15. Positionsmeßeinrichtung nach Anspruch 13 zur Messung von Winkeln, dadurch gekennzeichnet, daß den ersten Referenzmarken (R1$_i$) jeweils erste Codemarken (C1$_i$) und den zweiten Referenzmarken (R2$_i$) jeweils zweite Codemarken (C2$_i$) zugeordnet sind, wobei die Codemarken (C1$_i$, C2$_i$) die absoluten Positionswerte der zugehörigen Referenzmarken (R1$_i$, R2$_i$) in verschlüsselter Form enthalten.

16. Positionsmeßeinrichtung nach Anspruch 13 zur Messung von Winkeln, dadurch gekennzeichnet, daß der zweite Teilungsträger (S29) eine dritte Inkrementalteilung (T39) aufweist.

17. Positionsmeßeinrichtung nach Anspruch 14 zur Messung von Winkeln, dadurch gekennzeichnet, daß zur Eliminierung eines Exzentrizitätsfehlers zwischen dem ersten Teilungsträger (S19') und dem zweiten Teilungsträger (S29') auch auf dem ersten Teilungsträger (S19') wenigstens eine Referenzmarke (R0$_i$') angeordnet ist, durch deren Abtastung mit der ortsfesten ersten Abtasteinrichtung (A19) der vorab ermittelte Abstand zwischen der Referenzmarke (R1$_i$') und der weiteren Referenzmarke (R2$_i$') um den Exzentrizitätsfehler korrigiert wird.

18. Positionsmeßeinrichtung nach Anspruch 17 zur Messung von Winkeln, dadurch gekennzeichnet, daß die Korrektur durch Abrundung der letzten Stellen des Abstandsergebnisses erfolgt.

19. Positionsmeßeinrichtung nach Anspruch 1, dadurch gekennzeichnet, daß die erste Inkrementalteilung (T5) und die weitere Teilung (TR5) in einer Teilung zusammengefaßt sind.

## Claims

1. Position measuring device for measurement of the position of two objects (2, 3) movable relative to each other, and for reproduction of a reference position at any unknown instantaneous position of the objects (2, 3) to be measured, in which at least one scale body (6, 65, 66, 67) is rigidly connected to the first object (3) and at least one scanning unit (A1, A15, A16) for scanning a first incremental scale (T1, T5, T6, T7) of a scale body (6, 65, 66, 67) is rigidly connected to the second object (2), and in which at least one reference mark (R1, R15, R16) or reference code scale (TRC) is firmly associated with the first incremental scale (T1, T5, T6, T7) of the scale body (6, 65, 66), characterised in that there is provided as a reference scanning unit (RA, RA5, RA6) at least one additional scanning unit which is movable relative to the scale body (6, 65, 66, 106, 67) independently of the one or more scanning units (A1, A15, A16) and hence of the two objects (2, 3), and by scanning of the first incremental scale (T1) or an additional scale (TR5, TR6, TRC) determines the distance of the one or more scanning units (A1, A15, A16) from the one or more reference marks (R1, R15, R16) or the zero point of the reference code scale (TRC).

2. Position measuring device according to claim 1, characterised in that the first scanning unit (A1, A15, A16) and the reference scanning unit (RA, RA5, RA6) comprise indicator units (8, 7 ; 85, 75 ; 86, 76) which in case of coincidence form a zero indicator (78).

3. Position measuring device according to claim 1, characterised in that several scanning units (A15, A16, A25, A26) movable independently of each other, which indicator units (85, 86, 95, 96), are provided for scanning the first incremental scale (T5, T6) of the scale body (65, 66), and the indicator unit (75, 76) of the reference scanning unit (RA5, RA6) can be made to coincide with each of the other scanning units (A15, A16, A25, A26).

4. Position measuring device according to claim 1, characterised in that the reference scanning unit (RA, RA5, RA6) is displaceable relative to the scale body (6, 65, 106) manually or automatically by means of a separate drive.

5. Position measuring device according to claim 1, characterised in that the additional separate scale (TR5, TR6) with reference mark (R15, R16) or the reference code scale (TRC) is provided for the reference scanning unit (RA5, RA6), wherein the reference mark (R15, R16) or the zero point of the reference code scale (TRC) is however assigned absolutely to the first incremental scale (T5, T6, T7).

6. Position measuring device according to claims 1 and 5, characterised in that the additional separate scale (TR6) is disposed on a separate, second scale body (106).

7. Position measuring device according to claims 1, 3 and 6, characterised in that several scanning units (A15, A16, A25, A26) movable independently of each other are provided for scanning the first incremental scale (T5, T6), and for scanning the additional separate scale (TR5, TR6) with reference mark (R15, R16) there is provided the reference scanning unit (RA5, RA6) whose indicator unit (75, 76) can be made to coincide with each indicator unit (85, 86, 95, 96) of the respective scanning unit (A15, A16, A25, A26).

8. Position measuring device according to claims 1 and 5, characterised in that the scanning units of the first incremental scale (T7) comprise indicator units which can be made to coincide with an indicator unit of the scanning unit for the reference code scale (TRC).

9. Position measuring device according to claim 1, characterised in that the distance is measured during movement of one of the objects.

10. Position measuring device according to claim 1, 5, 6 or 8, characterised in that at any given time one of the scales with its associated scanning unit adopts an emergency function in case of failure of the other.

11. Position measuring device according to claims 1 and 6 for the measurement of angles, characterised in that the second scale body in the form of a graduated plate (S2) is rigidly and concentrically connected to the first scale body, also in the form of a graduated plate (S1), and the reference scanning unit (A2) together with an indicator unit (OT) is mounted rotatably and concentrically to the second graduated plate (S2) and can be turned by means of a drive (M, Z).

12. Position measuring device according to claim 11 for the measurement of angles, characterised in that a zero indicator (M) consists of a lighting unit (B3) and an associated photocell (P3) which are rigidly connected to the second object (02) and between which as an indicator unit is rotatably mounted a focussing lens (OT) for focussing the lighting unit (B3) onto the photocell (P3).

13. Position measuring device according to claims 1 and 6 for the measurement of angles, characterised by the following characteristics :

a) a first scale carrier (S19) provided with the first incremental scale (T19) is rigidly connected to a second scale carrier (S29) which comprises at least one first reference mark (R1$_i$) (i=1,2,...,n) associated absolutely with the first incremental scale (T19) ;

b) rigidly connected to the second object (029) is a third scale carrier (S39) which comprises a second scale (T29) provided with at least one second reference mark (R2$_i$) ;

c) for scanning of the one or more first reference marks (R1$_i$) of the second scale carrier (S29), and the second scale (T29) of the third scale carrier (S39) which is provided with the one or more second reference marks (R2$_i$), a second scanning unit (A29) is movable relative to the second scale carrier (S29) and relative to the third scale carrier (S39) ;

d) the distance of displacement of the second scanning unit (A29) corresponding to the distance between the first reference mark (R1$_i$) and the second reference mark (R2$_i$) can be recorded.

14. Position measuring device according to claim 13 for the measurement of angles, characterised by the following characteristics :

a) the second scale carrier in the form of a second graduated plate (S29) is rigidly and concentrically connected to the first scale carrier in the form of a first graduated plate (S19) ;

b) the third scale carrier in the form of an annular third graduated plate (S39) is rigidly connected to the second object (029), concentrically to the second graduated plate (S29) ;

c) the second scanning unit (A29) is rotatable concentrically to the second graduated plate (S29) and to the third graduated plate (S39) by means of a drive mechanism (M9, Z9).

15. Position measuring device according to claim 13 for the measurement of angles, characterised in that first code marks (C1$_i$) are associated with each of the first reference marks (R1$_i$), and second code marks (C2$_i$) are associated with

each of the second reference marks (R2$_i$), the code marks (C1$_i$, C2$_i$) containing the absolute position values of the associated reference marks (R1$_i$, R2$_i$) in coded form.

16. Position measuring device according to claim 13 for the measurement of angles, characterised in that the second scale carrier (S29) comprises a third incremental scale (T39).

17. Position measuring device according to claim 14 for the measurement of angles, characterised in that for elimination of an error of eccentricity between the first scale carrier (S19′) and the second scale carrier (S29′), on the first scale carrier (S19′) is also mounted at least one reference mark (R0$_i$′), by the scanning of which with the stationary first scanner (A19), the previously determined distance between the reference mark (R1$_i$′) and the additional reference mark (R2$_i$′) is corrected by the error of eccentricity.

18. Position measuring device according to claim 17 for the measurement of angles, characterised in that the correction is made by rounding off the last digits of the distance result.

19. Position measuring device according to claim 1, characterised in that the first incremental scale (T5) and the additional scale (TR5) are combined into one scale.

**Revendications**

1. Dispositif de mesure de position destiné à mesurer la position de deux objets (2, 3) réciproquement mobiles et à reproduire une position de référence dans le cas où la position momentanée des deux objets (2, 3) est inconnue, dispositif dans lequel au moins une règle (6, 65, 66, 67) est reliée au premier objet (3) et au moins un élément d'exploration (A1, A15, A16) destiné à explorer une première graduation incrémentale (T1, T5, T6, T7) d'une règle (6, 65, 66, 67) est relié de façon fixe au deuxième objet (2), et dans lequel au moins une marque de référence (R1, R15, R16) ou une graduation codée de référence (TRC) est associée de façon fixe à la première graduation incrémentale (T1, T5, T6, T7) de la règle (6, 65, 66), caractérisé par le fait que l'élément d'exploration de référence (RA, RA5, RA6) est constitué par au moins un autre élément d'exploration qui est indépendant dudit élément d'exploration (A1, A15, A16) et peut donc être déplacé par les deux objets (2, 3) par rapport à la règle (6, 65, 66, 67), ledit autre élément d'exploration détectant, par l'exploration de la première graduation incrémentale (T1) ou d'une autre graduation (TR5, TR6, TR7), la distance entre ledit élément d'exploration (A1, A15, A16) et au moins une marque de référence (R1, R15, R16) ou le point zéro de la graduation codée de référence (TRC).

2. Dispositif de mesure de position selon la revendication 1, caractérisé par le fait que le premier élément d'exploration (A1, A15, A16) et l'élément d'exploration de référence (RA, RA5, RA6) présentent des modules indicateurs (8, 7, ;

85, 75 ; 86, 76) qui, en cas de coïncidence, constituent un indicateur de zéro (78).

3. Dispositif de mesure de position selon la revendication 1, caractérisé par le fait que pour l'exploration de la première graduation incrémentale (T5, T6) de la règle (65, 66), sont prévus plusieurs éléments d'exploration (A15, A16, A25, A26) mobiles indépendamment les uns des autres, comprenant des modules indicateurs (85, 86, 95, 96), et par le fait que le module indicateur (75, 76) de l'élément d'exploration de référence (RA5, RA6) peut être amené en coïncidence avec chacun des autres éléments d'exploration (A15, A16, A25, A26).

4. Dispositif de mesure de position selon la revendication 1, caractérisé par le fait que l'élément d'exploration de référence (RA, RA5, RA6) peut être déplacé manuellement ou automatiquement au moyen d'une commande séparée par rapport à la règle (6, 65, 106).

5. Dispositif de mesure de position selon la revendication 1, caractérisé par le fait que pour l'élément d'exploration de référence (RA5, RA6) est prévue l'autre graduation séparée (TR5, TR6) portant la marque de référence (R15, R16) ou bien la graduation codée de référence (TRC), la marque de référence (R15, R16) ou le point zéro de la graduation codée de référence (TRC) étant cependant associé de façon absolue à la première graduation incrémentale (T5, T6, T7).

6. Dispositif de mesure de position selon revendication 1 et 5, caractérisé par le fait que l'autre graduation séparée (TR6) est disposée sur une deuxième règle (106) qui lui est propre.

7. Dispositif de mesure de position selon revendication 1, 3 et 6, caractérisé par le fait que pour l'exploration de la première graduation incrémentale (T5, T6) sont prévus plusieurs éléments d'exploration (A15, A16, A25, A26) mobiles indépendamment les uns des autres, par le fait que pour l'exploration de l'autre graduation séparée (TR5, TR6) comportant la marque de référence (R15, R16) est prévu l'élément d'exploration de référence (RA5, RA6) dont le module indicateur (75, 76) peut être amené en coïncidence avec chaque module indicateur (85, 86, 95, 96) de l'élément d'exploration respectif (A15, A16, A25, A26).

8. Dispositif de mesure de position selon revendication 1 et 5, caractérisé par le fait que les éléments d'exploration de la première graduation incrémentale (T7) présentent des modules indicateurs qui peuvent être amenés en coïncidence avec un module indicateur de l'élément d'exploration destiné à la graduation codée de référence (TRC).

9. Dispositif de mesure de position selon la revendication 1, caractérisé par le fait que la détermination de la distance a lieu pendant le mouvement de l'un des objets.

10. Dispositif de mesure de position selon revendication 1, 5, 6 ou 8, caractérisé par le fait que l'une des graduations et l'élément d'exploration qui lui est afférent effectue une fonction de recours en cas de défaillance de l'autre graduation, respectivement.

11. Dispositif de mesure de position selon revendication 1 et 6, destiné à mesurer des angles, caractérisé par le fait que la deuxième règle ayant la forme d'un disque gradué (S2) est reliée de façon fixe concentriquement à la première règle graduée ayant également la forme d'un disque gradué (S1) et par le fait que l'élément d'exploration de référence (A2) avec son module indicateur (OT) est monté en rotation concentriquement par rapport au deuxième disque gradué (S2) et que cette rotation s'effectue au moyen d'une commande (MZ).

12. Dispositif de mesure de position selon la revendication 11, destiné à mesurer des angles, caractérisé par le fait qu'un indicateur de zéro (N) est constitué d'un élément d'éclairage (B3) et d'une cellule photoélectrique (P3) qui lui est associée, que lesdits éléments sont reliés rigidement au deuxième objet (02) et qu'en tant que module indicateur, une optique (OT) destinée à reproduire l'élément d'éclairage (B3) sur la cellule photoélectrique (P3) est montée en rotation entre eux.

13. Dispositif de mesure de position selon revendication 1 et 6, destiné à mesurer des angles, caractérisé par le fait que :

a) un premier support de graduation (S19) muni d'une première graduation incrémentale (T19) est relié rigidement à un deuxième support de graduation (S29) qui présente au moins une première marque de référence (R1$_i$) (i=1, 2...n), associée de manière absolue à la première graduation incrémentale (T19) ;

b) au deuxième objet (029) est relié rigidement un troisième support de graduation (S39) qui présente une deuxième graduation (T29) munie d'au moins une deuxième marque de référence (R2$_i$) ;

c) pour l'exploration de la première marque de référence (R1$_i$) du deuxième support de graduation (S29) et l'exploration de la deuxième graduation (T29) du troisième support de graduation (S39), munie de la deuxième marque de référence (R2$_i$), un deuxième élément d'exploration (A29) peut être déplacé par rapport au deuxième support de graduation (S29) et par rapport au troisième support de graduation (S39) ;

d) le trajet de déplacement du deuxième élément d'exploration (A29) qui correspond à la distance entre la première marque de référence (R1$_i$) et la deuxième marque de référence (R2$_i$) peut être enregistré.

14. Dispositif de mesure de position selon la revendication 13 destiné à mesurer des angles, caractérisé par le fait que :

a) le deuxième support de graduation ayant la forme d'un deuxième disque gradué (S29) est relié rigidement, de manière concentrique, au premier support de graduation ayant la forme d'un premier disque gradué (S19) ;

b) le troisième support de graduation ayant la forme d'un troisième disque gradué (S39) est relié rigidement au deuxième objet (029) concentriquement par rapport au deuxième disque gradué (S29) ;

c) le deuxième élément d'exploration (A29) est mobile en rotation concentriquement par rapport au deuxième disque gradué (S29) et par rapport au troisième disque gradué (S39) au moyen d'une commande (M9, Z9).

15. Dispositif de mesure de position selon la revendication 13 pour mesurer des angles, caractérisé par le fait qu'aux premières marques de référence (R1$_i$) sont associées respectivement des premières marques codées (C1) et qu'aux deuxièmes marques de référence (R2$_i$) sont associées respectivement des deuxièmes marques codées (C2$_i$), lesdites marques codées (C1$_i$, C2$_i$) contenant, sous forme codée, les valeurs de position absolues des marques de référence (R1$_i$, R2$_i$) afférentes.

16. Dispositif de mesure de position selon la revendication 13, pour mesurer des angles, caractérisé par le fait que le deuxième support de graduation (S29) présente une troisième graduation incrémentale (T39).

17. Dispositif de mesure de position selon la revendication 14, pour mesurer des angles, caractérisé par le fait que pour éliminer une erreur d'excentricité entre le premier support de graduation (S19') et le deuxième support de graduation (S29'), au moins une marque de référence (RO$_i$') est disposée également sur le premier support de graduation (S19'), l'exploration de ladite marque de référence (RO$_i$') au moyen du premier élément d'exploration (A19) ayant pour effet de corriger l'erreur d'excentricité produite sur la distance préalablement déterminée entre la marque de référence (R1$_i$') et l'autre marque de référence (R2$_i$').

18. Dispositif de mesure de position selon la revendication 10, pour mesurer des angles, caractérisé par le fait que la correction s'effectue en arrondissant les derniers chiffres du résultat de distance.

19. Dispositif de mesure de position selon la revendication 1, caractérisé par le fait que la première graduation incrémentale (T5) et l'autre graduation (TR5) sont réunies en une seule graduation.

*Fig: 1*

*Fig: 2*

0 165 392

**Fig. 3**

T1

6

R1

**Fig. 4**

78

8

7

A1

RA

T1

6

0 165 392

**Fig. 5**

85  A15  T5  A25  95

75  RA5  TR5  R 15  65

**Fig. 6**

T6  86  A16  A26  96  66

RA6  76  TR6  R16  106

**Fig. 7**

T7

TRC  67

B1 K1 A18 T18 P1 P2 AP2 A2 K2 B2 Z M

W

01

G

02

L1 L1 P3 L2 L2 E1

T18 E2

S1 R T2 S2 OT N B3

*Fig. 8*

0 165 392

**Fig. 9**

S29

R 19

*Fig. 10*

R 29

T 29

S 39

*Fig. 11*

RF1

AP 29

TF 21

TF 22

RF2

*Fig. 12*

Fig. 13

Fig. 14

Fig. 15

Fig. 16

7